# EUROPÄISCHE PATENTSCHRIFT

(11) **EP 3 058 018 B1**
(45) Veröffentlichungstag und Bekanntmachung des Hinweises auf die Patenterteilung: **13.09.2017**
(21) Anmeldenummer: 14786180.1
(22) Anmeldetag: 17.10.2014
(51) Int. Cl.: C08J 9/16, C08J 9/34, C08J 9/12, C08J 9/14, B29C 44/34

(54) **VERFAHREN ZUR HERSTELLUNG VON EXPANDIERTEM THERMOPLASTISCHEM ELASTOMER**
METHOD FOR THE PRODUCTION OF EXPANDED THERMOPLASTIC ELASTOMERS
PROCÉDÉ DE FABRICATION D'ÉLASTOMÈRES THERMOPLASTIQUES EXPANSÉS

(30) Priorität: 18.10.2013 EP 13189353
(43) Veröffentlichungstag der Anmeldung: 24.08.2016
(73) Patentinhaber: BASF SE, 67056 Ludwigshafen am Rhein (DE)
(72) Erfinder: GUTMANN, Peter, 76199 Karlsruhe (DE); DÄSCHLEIN, Christian, 74850 Schefflenz (DE); AHLERS, Jürgen, 68649 Groß-Rohrheim (DE); MARTEN, Elke, 49179 Ostercappeln (DE); KAMINSKY, Torben, 49448 Lemförde (DE); KEMPFERT, Dick, 32351 Sternwede-Dielingen (DE)
(86) Internationale Anmeldenummer: PCT/EP2014/072309
(87) Internationale Veröffentlichungsnummer: WO 2015/055811

(56) Entgegenhaltungen:
- US-A- 3 310 617
- DATABASE WPI Week 200343 Thomson Scientific, London, GB; AN 2003-451594 XP002635412, -& JP 2002 347057 A (NHK SPRING CO LTD) 4. Dezember 2002 (2002-12-04)
- DATABASE WPI Week 201427, Derwent Publications Ltd., London, GB; AN 2013-S87352 -& CN 103 183 805 A (BEIJING ZHONGNENG JIANGLONG TECHNOLOGY) 03 Juli 2013

## Beschreibung

Die Erfindung betrifft ein Verfahren zur Herstellung von expandiertem thermoplastischem Elastomer, insbesondere expandiertem thermoplastischen Elastomer in Granulatform. Thermoplastische Elastomere, die zur Herstellung eingesetzt werden, sind zum Beispiel thermoplastische Polyurethane.

Expandierte thermoplastische Elastomere werden zum Beispiel zur Herstellung von beliebigen Schaumstofffestkörpern, beispielsweise für Gymnastikmatten, Körperprotektoren, Auskleidungselementen im Automobilbau, Schall- und Schwingungsdämpfern, Verpackungen oder Schuhsohlen verwendet. Bevorzugt ist es, ein Formwerkzeug mit Granulat aus einem expandierten Elastomer zu füllen und die einzelnen Granulatkörner durch Wärmeeinwirkung an ihrer Oberfläche anzuschmelzen und auf diese Weise miteinander zu verbinden. Somit lassen sich neben einfachen auch komplexe Halbzeuge oder Formteile mit Hinterschneidungen herstellen.

Schaumstoffe, insbesondere auch Partikelschaumstoffe, sind seit langem bekannt und in der Literatur vielfach beschrieben, zum Beispiel in Ullmanns "Enzyklopädie der technischen Chemie", 4. Auflage, Band 20, Seite 416 ff.

Aus der WO-A 2007/082838 ist ein Verfahren zur Herstellung von expandiertem, treibmittelhaltigem thermoplastischem Polyurethan bekannt. Darin wird in einem ersten Schritt ein thermoplastisches Polyurethan zu einem Granulat extrudiert. In einem zweiten Schritt wird das Granulat in wässriger Suspension unter Druck mit einem Treibmittel imprägniert und in einem dritten Schritt expandiert. In einer weiteren Ausführungsform des Verfahrens wird das thermoplastische Polyurethan zusammen mit einem Treibmittel in einem Extruder aufgeschmolzen und die Schmelze ohne eine Vorrichtung, die ein Aufschäumen verhindert, granuliert. Die Herstellung des thermoplastischen Polyurethans und die weitere Verarbeitung zu einem expandierten thermoplastischen Polyurethan in derselben Maschine sind nicht beschrieben.

Die Herstellung von thermoplastisch verarbeitbaren Polyurethanelastomeren ist zum Beispiel aus EP-A 1 213 307 bekannt. Die nach dem hier beschriebenen Verfahren hergestellten Polyurethane sind kompakt und werden nicht für die Herstellung von expandierten Elastomeren eingesetzt.

In der WO-A 2011/005705 ist ein Verfahren zur Herstellung extrudierter, geschäumter Polyurethane beschrieben. Hierzu werden einer ersten Sektion eines Extruders für die Herstellung von Polyurethanen eingesetzte Monomere zugefügt und an einer zweiten Position nach zwischenzeitlicher Vakuumentgasung ein Treibmittel zugegeben. Im weiteren Verlauf wird die Polymerschmelze im oder am Ende des Extruders aufgeschäumt und das geschäumte Material extrudiert. Hier können bereits kleine Schwankungen bei der Produktion zu unterschiedlichem Schaumaufbau führen, so dass an die Herstellung eines homogenen Schaums hohe Regelungsanforderungen zu stellen sind. Die hergestellten Halbzeuge und Formteile bestehen aus vernetzten Polyurethanen, welche im Anschluss nicht weiter durch thermische Behandlung umgeformt oder weiter verarbeitet werden können. Daher müssen die gewünschten Halbzeuge oder Formteile in der finalen Endform hergestellt werden. Komplexe Geometrien mit Hinterschneidungen lassen sich nicht realisieren.

Die Herstellung von expandierbarem thermoplastischem Polyurethangranulat ist aus DE-A 1 300 282 bekannt. Hier erfordert die Weiterverarbeitung jedoch ein erneutes Aufschmelzen, zum Beispiel in einem Extruder, wobei in diesem Fall im Allgemeinen bereits im Extruder ein Aufschäumen erfolgt. Insbesondere die Herstellung eines expandierten Granulats ist auf diese Weise nicht möglich.

Ein Verfahren, bei dem die Komponenten zur Polyurethanherstellung in einem Extruder vermischt werden, auf ein Band aufgebracht werden und auf dem Band aufschäumen und aushärten, ist in WO-A 96/20966 beschrieben. Ein weiteres Verfahren zur Herstellung von Polyurethan-Schaumstoffen, bei dem eine Aushärtung der Monomeren zum Polyurethan unmittelbar nach Verlassen des Extruders erfolgt, ist in DE-A 100 56 251 beschrieben. Sowohl in der WO-A 96/20966 als auch in der DE-A 100 56 251 werden Schäume aus duroplastischen Polyurethanen beschrieben. Diese lassen sich grundsätzlich nicht in der Form weiterverarbeiten wie thermoplastische Elastomere. Speziell die in WO-A 96/20966 hergestellten Polyurethanschäume sind sehr limitiert in ihrer Form, da das Bandverfahren lediglich die Blockherstellung mit nicht definierten Außenrändern zulässt. Diese Materialien können nicht direkt als Formteile hergestellt werden, sondern müssen beispielsweise über spanende Verfahren oder durch Schneiden zu Formteilen oder Halbzeugen weiterverarbeitet werden, wobei große Mengen an Verschnitt anfallen können. Weiterhin ist eine nachträgliche Umformung der in beiden Dokumenten beschriebenen Materialien durch Temperatureinwirkung nicht möglich, da die Materialien vernetzen und sich somit nicht mehr erweichen lassen. Dadurch ist die direkte Herstellung komplexer Formteile nicht möglich und die spätere Herstellung komplexer Formteile aus den Materialien nur mit großem Aufwand und in Verbindung mit Verschnittresten möglich. In beiden Fällen lassen sich insbesondere keine Partikel realisieren.

Aufgabe der vorliegenden Erfindung ist es, ein Verfahren zur Herstellung von expandiertem thermoplastischem Elastomer bereitzustellen, mit dem es insbesondere möglich ist, ein expandiertes Granulat mit einer definierten Porosität herzustellen.

Diese Aufgabe wird gelöst durch ein Verfahren zur Herstellung von expandiertem thermoplastischem Elastomer, folgende Schritte umfassend:
(a) Zugabe von zur Herstellung des thermoplastischen Elastomers eingesetzten Monomeren und/oder Oligomeren und gegebenenfalls weiterer Edukte in eine erste Stufe einer Polymerverarbeitungsmaschine,
(b) Mischen der Monomere und/oder Oligomere sowie der gegebenenfalls zugegebenen weiteren Edukte und Reaktion der Monomere und/oder Oligomere zu einer Polymerschmelze in der ersten Stufe der Polymerverarbeitungsmaschine,
(c) Einleiten der Polymerschmelze in eine zweite Stufe der Polymerverarbeitungsmaschine und Zugabe eines physikalischen Treibmittels sowie gegebenenfalls weiterer Edukte, um eine treibmittelhaltige Polymerschmelze zu erhalten,
(d) Formen der treibmittelhaltigen Polymerschmelze zu einem expandierten thermoplastischen Elastomer.

Das erfindungsgemäße Verfahren erlaubt es, ohne weitere Zwischenschritte direkt aus den Monomeren und gegebenenfalls einzusetzenden weiteren Edukten ein geschäumtes Halbzeug, zum Beispiel in Form eines expandierten Granulats, aus einem expandierten thermoplastischen Elastomer herzustellen. Das Verfahren erlaubt zudem eine große Variabilität der Schaumstruktur. Die erfindungsgemäß hergestellten, expandierten, thermoplastischen Elastomergranulate lassen sich ohne großen Aufwand und ohne Verschnitt zu komplexen Formteilen weiterverarbeiten.

In Abhängigkeit von den Verfahrensbedingungen beim Formen in Schritt (d) können unterschiedliche Porositäten des Schaums und expandierte thermoplastische Elastomere mit einer geschlossenen Haut hergestellt werden. Eine geschlossene Haut kann zum Beispiel aus haptischen Gründen gewünscht sein. Auch kann mit einer geschlossenen Haut das Eindringen von Feuchtigkeit in das geschäumte thermoplastische Elastomer verlangsamt oder sogar vollständig unterbunden werden. Ähnliche Verfahren werden in der JP-A 2002 347057 und in der CN-A 103183805 beschrieben, wobei jedoch anstelle eines physikalischen Treibmittels jeweils ein chemisches Treibmittel eingesetzt wird.

Im Rahmen der vorliegenden Erfindung wird dem allgemeinen Sprachgebrauch folgend neben dem Begriff "Elastomer" auch die Bezeichnung "Polymer" verwendet. Unter Bezug auf die Hauptkomponente des durch das erfindungsgemäße Verfahren hergestellten thermoplastischen Elastomers bezeichnet der Begriff "Polymer" das thermoplastische Elastomer.

Als Polymerverarbeitungsmaschinen können insbesondere Schneckenkolbenmaschinen oder Schmelzepumpen eingesetzt werden. Auch jede andere Maschine, mit der die Herstellung von Polymeren und nachfolgend von Granulaten aus dem Polymeren möglich ist, kann eingesetzt werden. Besonders bevorzugt sind jedoch Schneckenkolbenmaschinen.

Als Schneckenkolbenmaschinen zur Durchführung des erfindungsgemäßen Verfahrens werden bevorzugt Extruder eingesetzt. Allgemein nimmt mit steigendem Umsatz der Monomere und/oder Oligomere die Viskosität im entsprechenden Aufbau zu.

In einer Ausführungsform der Erfindung werden die Schritte (b) und (c) in einer Maschine durchgeführt. In diesem Fall ist die erste Stufe ein erster Abschnitt der Schneckenkolbenmaschine, in dem die Umsetzung der Monomere und/oder Oligomere, gegebenenfalls in Anwesenheit weiterer Edukte, zum Polymer erfolgt und die zweite Stufe ein zweiter Abschnitt der Schneckenkolbenmaschine, der sich unmittelbar an den ersten Abschnitt anschließt, in dem das physikalische Treibmittel zudosiert wird. Dieser Aufbau eignet sich insbesondere für den Einsatz von Extrudern zur Granulatherstellung.

Alternativ ist es auch möglich, eine erste Schneckenkolbenmaschine für die Herstellung des Polymers in Schritt (b) und eine zweite Schneckenkolbenmaschine für die Zudosierung des physikalischen Treibmittels in Schritt (c) einzusetzen, wobei die erste und die zweite Schneckenkolbenmaschine in diesem Fall so miteinander gekoppelt sind, dass die in der ersten Schneckenkolbenmaschine hergestellte Polymerschmelze unmittelbar in die zweite Schneckenkolbenmaschine übergeleitet wird. Der zweiten Schneckenkolbenmaschine zur Durchführung des Schritts (c) wird somit eine Polymerschmelze zugeführt, so dass das sonst notwendige Aufschmelzen des Polymeren entfällt. Eine entsprechende Anlage, die hier eingesetzt werden kann, ist zum Beispiel ein Tandemextruder, bei dem die erste Stufe der Schneckenkolbenmaschine ein erster Extruder des Tandemextruders und die zweite Stufe der Schneckenkolbenmaschine ein zweiter Extruder des Tandemextruders ist.

In einer besonders bevorzugten Ausführungsform wird als erste Stufe der Schneckenkolbenmaschine ein Doppelschneckenextruder eingesetzt. Diesem werden die Monomere und/oder Oligomere, die zur Herstellung des thermoplastischen Elastomeren eingesetzt werden, sowie gegebenenfalls weitere Edukte zugeführt. Im Doppelschneckenextruder werden die Monomere und/oder Oligomere zum thermoplastischen Elastomer umgesetzt. Die erste Stufe der Schneckenkolbenmaschine ist dabei so gestaltet, dass die Verweilzeit ausreichend ist, um die eingesetzten Monomere und/oder Oligomere zum thermoplastischen Elastomer umzusetzen. Hierzu ist es zum Beispiel möglich, die Länge der ersten Stufe, die Drehzahl der mindestens einen Schnecke der Schneckenkolbenmaschine und die Gangtiefe der Schnecke zu variieren. In Abhängigkeit der geometrischen Daten der ersten Stufe und der Drehzahl der mindestens einen Schnecke stellt sich die Verweilzeit ein.

In der zweiten Stufe der Schneckenkolbenmaschine wird anschließend das physikalische Treibmittel zudosiert. Um dieses gleichmäßig in der Polymerschmelze zu verteilen, weist die zweite Stufe der Schneckenkolbenmaschine zum Beispiel geeignete Mischeinheiten an der Schnecke auf. Hierbei ist es auch möglich, zusätzlich einen statischen Mischer zu verwenden.

Neben einem Extruder kann alternativ auch eine Schmelzepumpe eingesetzt werden. Um eine gleichmäßige Verteilung des physikalischen Treibmittels im Polymeren zu erhalten, ist der Schmelzepumpe vorzugzugsweise vor Eintritt in ein Granuliersystem ein statischer Mischer nachgeschaltet.

Zur Herstellung des Granulats wird die Polymerschmelze üblicherweise zu Strängen extrudiert, die anschließend zum Granulat geschnitten werden. Durch die Zugabe des physikalischen Treibmittels expandiert die Polymerschmelze beim Verlassen des Extruders aufgrund des Druckabfalls und es entsteht ein geschäumtes Produkt, bei der Granulierung auf diese Weise ein expandiertes Granulat.

Bevorzugt ist es, zur Herstellung des Granulats in Schritt (d) die Polymerschmelze durch eine temperierte Lochplatte in eine Granulierkammer zu pressen, mit einer Schneidvorrichtung in einzelne expandierende Granulatkörner zu schneiden und die Granulatkörner mit einem Flüssigstrom aus der Granulierkammer auszutragen. Dabei beträgt die Temperatur der temperierten Lochplatte vorzugsweise zwischen 150 und 280°C.

Um ein unkontrolliertes Aufschäumen der Polymerschmelze in der Granulierkammer zu verhindern und ein gleichmäßig geschäumtes Granulat herzustellen, ist es vorteilhaft, die Granulierkammer mit einem Druck zu beaufschlagen, der oberhalb dem Umgebungsdruck liegt. Besonders bevorzugt ist es weiterhin, die Granulierkammer mit einer Flüssigkeit zu fluten, so dass die Treibmittel enthaltende, thermoplastische Polymerschmelze direkt in die Flüssigkeit gepresst wird. Bevorzugt ist die eingesetzte Flüssigkeit in der Granulierkammer Wasser.

Wenn expandierte Granulatkörner mit einer geschlossenen Haut hergestellt werden sollen, wird die Granulierkammer vorzugsweise von einer Flüssigkeit durchströmt, die auf eine Temperatur im Bereich von 10 bis 60°C temperiert ist und deren Druck 0,7 bis 20 bar oberhalb des Umgebungsdrucks liegt, wobei Druck und Temperatur der Flüssigkeit in der Granulierkammer sowie die Temperatur der Lochplatte so gewählt werden, dass die Granulatkörner in der unter Druck stehenden Flüssigkeit durch das enthaltene physikalische Treibmittel so expandiert werden, dass expandierte Granulatkörner mit einer geschlossenen Haut entstehen.

Der für die Granulierung notwendige Druck an der Granuliervorrichtung in der Polymerverarbeitungsmaschine sowie die notwendige Temperatur der Schmelze sind abhängig vom zu verarbeitenden Elastomer sowie der verwendeten Hilfsstoffe und des eingesetzten physikalischen Treibmittels. Des Weiteren sind der notwendige Druck und die notwendige Temperatur abhängig von dem Mischungsverhältnis der Komponenten im Elastomer zueinander.

In der Granulierkammer wird das durch die temperierte Lochplatte gedrückte Polymer zu Strängen geformt, die mit einer Schneidevorrichtung in einzelne expandierende Granulatkörner zerkleinert werden. Die Schneidevorrichtung kann beispielsweise als schnell rotierendes Messer ausgeführt sein. Die Form der entstehenden Granulatkörner ist zum einen abhängig von der Form und Größe der Öffnungen in der Lochplatte, zum anderen ist die Form abhängig von dem Druck, mit dem die Schmelze durch die Löcher der Lochplatte gedrückt wird und der Geschwindigkeit der Schneidevorrichtung. Bevorzugt werden der Einpressdruck, die Geschwindigkeit der Schneidevorrichtung und die Größe der Öffnungen in der Lochplatte so gewählt, dass die Form der Granulatkörner im Wesentlichen sphärisch ist. Die Zusammenhänge zwischen Messerzahl, Lochzahl und Messerdrehzahl sind dem Fachmann bekannt.

Die Granulatkörner werden zum Beispiel mit Hilfe der durch die Granulierkammer strömenden temperierten Flüssigkeit aus der Granulierkammer ausgetragen. Der Druck und die Temperatur der temperierten Flüssigkeit sind dabei so gewählt, dass die Polymerstränge/Granulatkörner durch das enthaltene physikalische Treibmittel kontrolliert expandiert werden und eine geschlossene Haut an der Oberfläche der Granulatkörner erzeugt wird.

Zusammen mit der temperierten Flüssigkeit strömt das Granulat zum Beispiel in einen Trockner, wo es von der Flüssigkeit getrennt wird. Das fertige, expandierte Granulat kann in einem Behälter aufgefangen werden, während die Flüssigkeit gefiltert und über eine Druckpumpe wieder in die Granulierkammer geleitet wird.

Durch die Granulierung in einer unter Druck stehenden Flüssigkeit mit kontrollierter Flüssigkeitstemperatur wird vermieden, dass die treibmittelhaltige Polymerschmelze unkontrolliert expandiert, ohne dass sich eine geschlossene Haut ausbilden kann. Solche Partikel würden zwar anfangs eine geringe Schüttdichte aufweisen, jedoch schnell wieder in sich zusammen fallen. Das Ergebnis wären inhomogene Partikel von hoher Schüttdichte. Durch das erfindungsgemäße Verfahren wird die Expansion der Granulatkörner kontrolliert verlangsamt, so dass homogen strukturierte Partikel entstehen, die eine geschlossene Haut besitzen und in ihrem Inneren eine zellige Struktur aufweisen. Die Größe der Zellen ist kleiner als 250 µm, bevorzugt kleiner als 100 µm. Die Schüttdichte des expandierten Granulats ist typischerweise im Bereich von 30 g/l bis 350 g/l und ist bevorzugt im Bereich von 80 g/l bis 140 g/l.

Die Expansion des Granulats wird durch Einstellen von Druck und Temperatur der temperierten Flüssigkeit in der Granulierkammer, sowie durch Einstellen der Temperatur der Lochplatte kontrolliert. Expandieren die Granulatkörner zu schnell beziehungsweise unkontrolliert, so dass sich keine geschlossene Haut bildet, wird der Druck der Flüssigkeit in der Granulierkammer erhöht und/oder die Temperatur der temperierten Flüssigkeit in der Granulierkammer abgesenkt. Der vergrößerte Druck der die Granulatkörner umgebenden temperierten Flüssigkeit wirkt der Expansionswirkung des physikalischen Treibmittels entgegen und bremst die Expansion des Granulats. Die Verringerung der Temperatur der temperierten Flüssigkeit in der Granulierkammer bewirkt eine dickere Haut der Partikel und bietet der Expansion somit mehr Widerstand. Bei einem im Verhältnis zum verwendeten physikalischen Treibmittel zu hohen Flüssigkeitsdruck oder einer zu niedrigen Temperatur der temperierten Flüssigkeit, kann ein Expandieren der Granulatkörner zu stark behindert oder gar vollständig unterbunden werden, so dass Granulat mit zu großer Schüttdichte entsteht. In diesem Fall wird der Druck der temperierten Flüssigkeit in der Granulierkammer abgesenkt und/oder die Temperatur der temperierten Flüssigkeit angehoben.

Bei der Herstellung von expandiertem Granulat aus den treibmittelhaltigen Polymerschmelzen liegt der Druck in der die Granulierkammer durchströmenden temperierten Flüssigkeit vorzugsweise zwischen 0,7 bar und 20 bar. Bevorzugt liegt der Druck in der Flüssigkeit zwischen 5 und 15 bar, besonders wird ein Druck zwischen 10 und 15 bar bevorzugt.

Zusätzlich oder alternativ zur Anpassung des Drucks und/oder der Temperatur der temperierten Flüssigkeit in der Granulierkammer kann die Expansion der Granulatkörner auch über die Temperatur der temperierten Lochplatte beeinflusst werden. Durch Absenken der Temperatur der temperierten Lochplatte kann Wärme aus der Polymerschmelze schneller an die Umgebung abgegeben werden. Dadurch wird die Bildung einer geschlossenen Haut, die Voraussetzung für ein stabiles, geschäumtes Granulatkorn ist, gefördert. Wird die Temperatur der temperierten Lochplatte und/oder der Flüssigkeit in der Granulierkammer zu niedrig gewählt, kühlt die Polymerschmelze zu schnell aus und verfestigt sich, bevor eine ausreichende Expansion einsetzen kann. Die Expansion des Granulatkorns durch das enthaltene physikalische Treibmittel wird so erschwert, dass Granulat mit einer zu hohen Schüttdichte entsteht. Deswegen werden die Temperatur der temperierten Flüssigkeit in der Granulierkammer und/oder die Temperatur der temperierten Lochplatte in einem solchen Fall erhöht.

Die Temperatur der Flüssigkeit in der Granulierkammer liegt vorzugsweise zwischen 10 °C und 60 °C, um eine kontrollierte Expansion der Granulatkörner, bei der eine geschlossene Schaumhaut ausgebildet wird, zu erlauben. Bevorzugt liegt die Temperatur der Flüssigkeit zwischen 25 °C und 45 °C. Die Temperatur der temperierten Lochplatte liegt vorzugsweise zwischen 150°C und 280°C, bevorzugt wird eine Temperatur der Lochplatte zwischen 220°C und 260°C, besonders bevorzugt wird ein Temperaturbereich der temperierten Lochplatte von 245 °C bis 255 °C.

Eine zu hohe Lochplattentemperatur führt zu einer dünnen Haut auf der Oberfläche der Partikel und einem späteren Kollabieren der Oberfläche. Zu niedrige Lochplattentemperaturen verringern den Expansionsgrad und führen zu dicken, ungeschäumten Partikeloberflächen.

Das Granulat, das mit dem erfindungsgemäßen Verfahren hergestellt wird, weist vorzugsweise ein Partikelgewicht im Bereich von 1 bis 40 mg auf. Die Dichte des expandierten thermoplastischen Elastomers liegt vorzugsweise im Bereich von 30 bis 350 g/l.

Im Rahmen der vorliegenden Erfindung werden unter physikalischen Treibmitteln Treibmittel verstanden, deren chemische Struktur beim Expansionsvorgang unverändert bleibt, deren Aggregatzustand sich beim Expansionsvorgang ändern kann und die zum Expandieren gasförmig vorliegen. Treibmittel sind beispielsweise in Thermoplastic Foam Processing Principles and Development, edited by Richard Gendron, CRC Press, 2005, beschrieben.

Das physikalische Treibmittel enthält in einer bevorzugten Ausführungsform Kohlendioxid, Stickstoff oder eine Mischung aus Kohlendioxid und Stickstoff. Hierbei kann jede beliebige Mischung aus Stickstoff und Kohlendioxid eingesetzt werden. Bevorzugt ist es jedoch, als Treibmittel ein Gemisch aus Kohlendioxid und Stickstoff einzusetzen, das 50 Gew.-% bis 100 Gew.-% Kohlendioxid und 0 Gew.-% bis 50 Gew.-% Stickstoff enthält. Alternativ oder zusätzlich kann das Treibmittel auch ein organisches Treibmittel, beispielsweise Alkane, halogenierte Kohlenwasserstoffe oder einer Mischung dieser Substanzen enthalten. Hierbei eignen sich als Alkane zum Beispiel Ethan, Propan, Butan oder Pentan. Der alleinige Einsatz von CO₂ und/oder N₂ sowie deren Kombination als Treibmittel ohne Zugabe weiterer Treibmittel ist besonders vorteilhaft, da es sich um Inertgase handelt, die unbrennbar sind, so dass bei der Produktion keine explosionsfähigen Atmosphären entstehen können. Dadurch werden kostenintensive Sicherheitsvorkehrungen unnötig und das Gefahrenpotential bei der Herstellung stark reduziert. Ebenfalls vorteilhaft ist, dass keine Auslagerzeit der Produkte aufgrund des Ausdampfens von flüchtigen brennbaren Stoffen erforderlich ist.

Weitere Vorteile ergeben sich, wenn der treibmittelhaltigen Polymerschmelze zusätzlich ein oder mehrere Nukleierungsmittel als zusätzliche Edukte zugegeben werden. Als Nukleierungsmittel eignen sich insbesondere Talkum, Calciumfluorid, Natriumphenylphosphinat, Aluminiumoxid, Ruß, Graphit, Pigmente und feinteiliges Polytetrafluorethylen jeweils einzeln oder auch in beliebigen Mischungen. Besonders bevorzugt als Nukleierungsmittel ist Talkum. Der Anteil an Nukleierungsmittel bezogen auf die Gesamtmasse der thermoplastischen Formmasse bzw. der Polymerschmelze liegt vorzugsweise bei 0 bis 4 Gew.-%, insbesondere bei 0,1 bis 2 Gew.-%. Das Nukleierungsmittel kann dabei entweder in der ersten Stufe oder in der zweiten Stufe zugegeben werden.

Die Zugabe des physikalischen Treibmittels kann zum Beispiel über ein Injektionsventil mittels einer Gas- oder Flüssigdosiereinheit, je nach Aggregatszustand des physikalischen Treibmittels, in die Polymerverarbeitungsmaschine realisiert werden.

Das thermoplastische Elastomer, aus dem das expandierte Granulat hergestellt wird, ist beispielsweise ausgewählt aus thermoplastischen Polyesterelastomeren, beispielsweise Polyetherester oder Polyesterester, thermoplastischen Copolyamiden, beispielsweise Polyethercopolyamiden, oder Styrol-Blockcopolymeren, beispielsweise Styrol-Butadien-Blockcopolymeren. Insbesondere bevorzugt ist das thermoplastische Elastomer ein thermoplastisches Polyurethan.

Neben den Monomeren und/oder Oligomeren, die zum thermoplastischen Elastomer umgesetzt werden, können weitere Edukte zugegeben werden. Durch die Zugabe der weiteren Edukte können die physikalischen oder chemischen Eigenschaften des Elastomers eingestellt werden. Zusätzlich kann gegebenenfalls auch ein Katalysator als weiteres Edukt zugegeben werden, mit dem die Umsetzung der Monomere und/oder Oligomere zum Polymeren katalysiert wird.

Weitere Additive können zum Beispiel ausgewählt sein aus Nukleierungsmitteln, oberflächenaktiven Substanzen, Füllstoffen, Flammschutzmitteln, beispielsweise phosphorhaltigen Systemen, Keimbildungsmitteln, Oxidationsstabilisatoren, zusätzlichen weiteren Stabilisatoren, zum Beispiel gegen Hydrolyse, Licht, Hitze oder Verfärbung, Verstärkungsmitteln und Weichmachern, Gleit- und Entformungshilfen, Farbstoffen und Pigmenten sowie aus beliebigen Mischungen dieser Substanzen. Wenn Füllstoffe eingesetzt werden, so können diese anorganische und/oder organische Pulver oder Faserstoffe sowie Mischungen daraus sein. Die mittleren Teilchendurchmesser beziehungsweise bei faserförmigen Füllstoffen die Länge der Fasern sollte im Bereich der Zellgröße oder kleiner sein. Bevorzugt wird ein mittlerer Teilchendurchmesser beziehungsweise eine mittlere Länge der Fasern im Bereich von 0,1 bis 100 µm, bevorzugt im Bereich von 1 bis 50 µm.

Wenn ein thermoplastisches Polyurethan verwendet wird, so kann das thermoplastische Polyurethan jedes beliebige, dem Fachmann bekannte thermoplastische Polyurethan sein. Thermoplastische Polyurethane und Verfahren zu deren Herstellung sind bereits vielfach beschrieben, beispielsweise in Gerhard W. Becker und Dietrich Braun, Kunststoffhandbuch, Band 7, "Polyurethane", Carl Hanser Verlag, München, Wien, 1993.

In einer bevorzugten Ausführungsform wird das thermoplastische Polyurethan durch Umsetzung aus einer Mischung von Isocyanaten mit gegenüber Isocyanaten reaktiven Verbindungen, bevorzugt mit einem Molekulargewicht von 0,5 kg/mol bis 10 kg/mol als Monomere beziehungsweise Oligomere und gegebenenfalls Kettenverlängerungsmitteln, bevorzugt mit einem Molekulargewicht von 0,05 kg/mol bis 0,5 kg/mol hergestellt. In einer weiteren bevorzugten Ausführungsform wird zur Herstellung des thermoplastischen Polyurethans der Mischung weiterhin mindestens ein Kettenregler, ein Katalysator und gegebenenfalls mindestens ein Füll-, Hilfs- und/oder Zusatzstoff zugesetzt.

Zur Herstellung von thermoplastischem Polyurethan wird auf jeden Fall eine Mischung aus Isocyanaten und gegenüber Isocyanaten reaktiven Verbindungen benötigt. Der weitere Zusatz der Kettenverlängerungsmittel, Kettenregler, Katalysatoren und Füll-, Hilfs- und/oder Zusatzstoffe ist optional und kann einzeln oder in allen möglichen Variationen erfolgen.

In bevorzugten Ausführungsformen werden als organische Isocyanate aliphatische, cycloaliphatische und/oder aromatische Isocyanate eingesetzt. Besonders bevorzugt werden aromatische, aliphatische und/oder cycloaliphatische Diisocyanate verwendet. Beispiele für bevorzugte Diisocyanate sind Trimethylendiisocyanat, Tetramethylendiisocyanat, Pentamethylendiisocyanat, Hexamethylendiisocyanat, Heptamethylendiisocyanat, Oktamethylendiisocyanat; 2-Mehtylpentamethylendiisocyanat-1,5; 2-Ethylbutylendiisocyanat-1,4; Pentamethylendiisocyanat-1,5; Butylendiisocyanat-1,4; 1-Isocyanato-3,3,5-trimethyl-5-isocyanatomethylcyclohexan; 1,4-Bis(isocyanatomethyl)cyclohexan; 1,3-Bis(isocyanatomethyl)cyclohexan; 1,4-Cyclohexandiisocyanat; 1-Methyl-2,4-cyclohexandiisocynat, 1-Methyl-2,6-cyclohexandiisocyanat, 2,2'-Dicyclohexylmethandiisocyanat, 2,4'-Dicyclohexylmethandiisocyanat, 4,4'-Dicyclohexylmethandiisocyanat, 2,2'-Diphenylmethandiisocyanat; 2,4'-Diphenylmethandiisocyanat, 4,4'-Diphenylmethandiisocyanat; 1,5-Naphthylendiisocyanat; 2,4-Toluylendiisocyanat; 2,6-Toluylendiisocyanat; Diphenylmethandiisocyanat; 3,3'-Dimethyldiphenyl-diisocyanat; 1,2-Diphenylethandiisocyanat und Phenylendiisocyanat.

Neben dem Isocyanat ist die thermoplastische Formmasse aufgebaut aus einer Verbindung mit mindestens zwei mit Isocyanatgruppen reaktiven, wasserstoffhaltigen Gruppen. Hierbei ist die mit der Isocyanatgruppe reaktive wasserstoffhaltige Gruppe vorzugsweise eine Hydroxylgruppe. Besonders bevorzugt ist die Verbindung mit mindestens zwei mit Isocyanatgruppen reaktiven wasserstoffhaltigen Gruppen ausgewählt aus Polyetherol, Polyesterol und Polycarbonatdiol. Hierbei werden Polyesterole, Polyetherole und/oder Polycarbonatdiole üblicherweise auch unter dem Begriff "Polyole" zusammengefasst.

Bevorzugt wird das thermoplastische Polyurethan aus Polyetheralkohol hergestellt. Hierbei wird besonders bevorzugt Polyetherdiol verwendet. Ein besonders bevorzugtes Polyetherdiol ist Polytetrahydrofuran. Bevorzugt werden die Polyetheralkohole, beispielsweise das Polytetrahydrofuran, mit einem Molekulargewicht zwischen 0,6 kg/mol und 2,5 kg/mol verwendet. Die Polyetheralkohole werden einzeln oder auch als Mischung verschiedener Polyetheralkohole eingesetzt.

In einer alternativen Ausführungsform wird zur Herstellung des thermoplastischen Polyurethans ein Polyesteralkohol verwendet. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht zwischen 0,6 kg/mol und 2,5 kg/mol auf.

In weiter bevorzugten Ausführungsformen haben die zur Herstellung des thermoplastischen Polyurethans eingesetzten Polyole Molekulargewichte von 0,5 kg/mol bis 8 kg/mol, mehr bevorzugt von 0,6 kg/mol bis 6 kg/mol und insbesondere von 0,8 kg/mol bis 4 kg/mol. In weiter bevorzugten Ausführungsformen weisen die Polyole eine mittlere Funktionalität von 1,8 bis 2,3, weiter bevorzugt von 1,9 bis 2,2 und insbesondere von 2 auf. In einer besonders bevorzugten Ausführungsform ist das Polyol ein Polyesteralkohol, bevorzugt aus Polytetrahydrofuran synthetisiert und hat in einer weiter bevorzugten Ausführungsform ein Molekulargewicht zwischen 0,6 kg/mol und 2,5 kg/mol.

Wenn zur Herstellung des thermoplastischen Polyurethans Kettenverlängerer eingesetzt werden, so sind diese vorzugsweise aliphatische, aromatische und/oder cycloaliphatische Verbindungen, die in weiter bevorzugten Ausführungsformen ein Molekulargewicht von 0,05 kg/mol bis 0,5 kg/mol haben. Die Kettenverlängerer sind zum Beispiel Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Decaalkylenglykole mit 3 bis 8 Kohlenstoffatomen und entsprechende Oligo- und/oder Polypropylenglykole. In weiteren Ausführungsformen zur Herstellung des thermoplastischen Polyurethans werden Mischungen der Kettenverlängerer eingesetzt.

Wenn Kettenregler eingesetzt werden, so weisen diese üblicherweise ein Molekulargewicht von 0,03 kg/mol bis 0,5 kg/mol auf. Kettenregler sind Verbindungen, die gegenüber Isocyanaten nur eine funktionelle Gruppe aufweisen. Beispiele für Kettenregler sind monofunktionelle Alkohole, monofunktionelle Amine, bevorzugt Methylamin und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der Verbindung mit mindestens zwei mit Isocyanatgruppen reaktiven wasserstoffhaltigen Gruppen eingesetzt. Kettenregler werden in Ergänzung zu Kettenverlängerern oder anstelle dieser eingesetzt.

In weiteren Ausführungsformen wird zur Herstellung des thermoplastischen Polyurethans mindestens ein Katalysator verwendet, der insbesondere die Reaktion zwischen den Isocyanatgruppen der Diisocyanate und den gegenüber Isocyanaten reaktiven Verbindungen, bevorzugt Hydroxylgruppen, der Verbindung mit mindestens zwei mit Isocyanatgruppen reaktiven wasserstoffhaltigen Gruppen, der Kettenregler und der Kettenverlängerer beschleunigt. In bevorzugten Ausführungsformen ist der Katalysator ausgewählt aus der Gruppe der tertiären Amine, beispielsweise Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiter bevorzugten Ausführungsformen ist der mindestens eine Katalysator aus der Gruppe der organischen Metallverbindungen ausgewählt und ist, exemplarisch genannt, Titansäureester, eine Eisenverbindung, beispielsweise Eisen-(III)acetylacetonat, eine Zinnverbindung, beispielsweise Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren verwendet. In einer bevorzugten Ausführungsform wird als Katalysator eine Mischung von Katalysatoren in Mengen von 0,0001 Gew.-% bis 0,1 Gew.-%, bezogen auf die Verbindung mit mindestens zwei mit Isocyanatgruppen reaktiven wasserstoffhaltigen Gruppen, bevorzugt der Polyhydroxylverbindung, eingesetzt.

Als Hilfs- und/oder Zusatzstoffe können zum Beispiel Hydrolyseschutzmittel und Flammschutzmittel eingesetzt sein. Weitere Zusatzstoffe und Hilfsstoffe können Standardwerken wie beispielsweise dem bereits vorstehend genannten Gerhard W. Becker und Dietrich Braun, Kunststoffhandbuch, Band 7 "Polyurethane", Carl Hanser Verlag, München, Wien, 1993, entnommen werden.

Neben Katalysatoren, aber auch ohne die Verwendung von Katalysatoren können den Isocyanaten und der Verbindung mit mindestens zwei mit Isocyanatgruppen reaktiven wasserstoffhaltigen Gruppen zur Herstellung des thermoplastischen Polyurethans auch Hydrolyseschutzmittel, beispielsweise Polymere und niedermolekulare Carbodiimide hinzugefügt werden.

In einer weiteren Ausführungsform kann das thermoplastische Polyurethan eine Phosphorverbindung enthalten.

Zur Einstellung der Shore-Härte von thermoplastischen Polyurethanen können die Verbindungen mit mindestens zwei mit Isocyanatgruppen reaktiven wasserstoffhaltigen Gruppen und die Kettenverlängerer in relativ breiten molaren Verhältnissen variiert werden. In bevorzugten Ausführungsformen verhält sich das molare Verhältnis der Verbindungen mit mindestens zwei mit Isocyanatgruppen reaktiven wasserstoffhaltigen Gruppen zum insgesamt eingesetzten Kettenverlängerer wie 10:1 bis 1:10, bevorzugt 5:1 bis 1:8, weiter bevorzugt wie 1:1 bis 1:4, wobei die Härte des thermoplastischen Polyurethans mit zunehmendem Gehalt an Kettenverlängerer ansteigt. Bevorzugt sind Shore-Härten von A44 bis D30, besonders bevorzugt von A62 bis A95, insbesondere von A62 bis A85. Die Shore-Härten werden bestimmt nach der DIN 53505 am kompakten, das heißt nicht expandierten thermoplastischen Polyurethan.

In weiter bevorzugten Ausführungsformen erfolgt die Umsetzung zum thermoplastischen Polyurethan bei üblichen Kennzahlen. Die Kennzahl ist definiert durch das Verhältnis der insgesamt bei der Umsetzung eingesetzten Isocyanatgruppen des aromatischen, aliphatischen und/oder cycloaliphatischen Diisocyanats zu den gegenüber Isocyanaten reaktiven Gruppen, d.h. den aktiven Wasserstoffen der Verbindung mit mindestens zwei mit Isocyanatgruppen reaktiven wasserstoffhaltigen Gruppen und der Kettenverlängerer. Bei einer Kennzahl von 100 kommt auf eine Isocyanatgruppe des aromatischen, aliphatischen und/oder cycloaliphatischen Diisocyanats ein aktives Wasserstoffatom, d.h. eine gegenüber Isocyanaten reaktive Funktion der Verbindung mit mindestens zwei mit Isocyanatgruppen reaktiven wasserstoffhaltigen Gruppen und der Kettenverlängerer. Bei Kennzahlen über 100 liegen mehr Isocyanatgruppen als gegenüber Isocyanaten reaktiven Gruppen, beispielsweise Hydroxylgruppen vor.

In besonders bevorzugten Ausführungsformen erfolgt die Umsetzung zum thermoplastischen Polyurethan bei einer Kennzahl zwischen 60 und 120, weiter bevorzugt bei einer Kennzahl zwischen 80 und 110.

Zusätzlich kann die thermoplastische Formmasse gegebenenfalls mindestens ein Additiv enthalten. Als Additiv werden dabei Füllstoffe, Hilfsstoffe und Zusatzstoffe sowie die vorstehend beschriebenen Kettenregler, Kettenverlängerer und Katalysatoren verstanden. Die Additive können dabei in beliebigen Mischungen eingesetzt werden. Der Anteil der Additive an der Gesamtmasse der thermoplastischen Formmasse liegt vorzugsweise bei 0 bis 80 Gew.-%.

Erfindungsgemäß werden die zur Herstellung des thermoplastischen Polyurethans verwendeten Einsatzstoffe der ersten Stufe der Polymerverarbeitungsmaschine zugegeben. Die Zugabe kann dabei über eine gemeinsame Zugabestelle am Einlass in die Polymerverarbeitungsmaschine erfolgen oder über mehrere Zugabestellen, die über die Länge der Polymerverarbeitungsmaschine, insbesondere der Schneckenkolbenmaschine, verteilt angeordnet sind. Bevorzugt ist es, zunächst Monomere und/oder Oligomere sowie gegebenenfalls notwendigen Katalysator zuzugeben und die weiteren Additive zur Einstellung der Eigenschaften des Polymeren an einer späteren Stelle, nachdem bereits zumindest ein Teil der Monomere und/oder Oligomere zum Polymeren reagiert hat.

Eine geeignete Polymerverarbeitungsmaschine, die zur Herstellung von expandiertem Granulat eingesetzt werden kann, ist beispielsweise ein Doppelschneckenextruder. Die Länge des Doppelschneckenextruders wird so gewählt, dass nach der Umsetzung der Monomere und/oder Oligomere zum Polymer eine Druckeinstellung erfolgen kann. Hierzu ist es besonders vorteilhaft, wenn die Länge so gewählt wird, dass der Druck über eine Länge von mindestens 15 L/D, wobei L/D das Verhältnis von Länge zu Durchmesser beschreibt, vor dem Ende der zweiten Stufe eingestellt werden kann. Durch mindestens ein abstauendes Förderelement oder Knetelement, bevorzugt zwei bis drei abstauende Förderelemente oder Knetelemente können die Bereiche der Reaktion und der Druckeinstellung voneinander getrennt werden. Die Einstellung des Drucks nach Umsetzung der Monomere und/oder Oligomere kann beispielsweise durch die Beschaffenheit der Schneckenelemente, die Prozessparameter, wie Schneckendrehzahl, und/oder dem Einsatz einer Zahnradpumpe nach dem Extruder gewährleistet werden. Hierdurch wird ein Druck im Doppelschneckenextruder von mindestens 50 bar, bevorzugt von 60 bis 100 bar oberhalb des Umgebungsdrucks erzeugt. In dem Bereich, in dem dieser Druck vorherrscht, erfolgt die Zugabe des physikalischen Treibmittels, beispielsweise über ein Injektionsventil mittels einer Gasdosiereinheit. Nach der Zugabe wird das physikalische Treibmittel über eine Länge von mindestens 5 L/D, bevorzugt von mindestens 10 L/D durch Mischelemente homogen mit der Polymerschmelze vermischt. Zur Förderung der treibmittelbeladenen Schmelze können zusätzlich Förderelemente an mindestens einer Schnecke des Doppelschneckenextruders vorgesehen sein.

In einer alternativen Ausführungsform schließt sich an die erste Stufe der Polymerverarbeitungsmaschine ein Schmelzekanal mit der Zugabestelle für das physikalische Treibmittel als zweite Stufe an. In diesem Fall umfasst die zweite Stufe zusätzlich eine Schmelzepumpe und einen statischen Mischer. Der Schmelzekanal ist beispielsweise ein beheizbares Rohr, durch das die Polymerschmelze fließt und in das das physikalische Treibmittel eingebracht werden kann. Hierzu kann ebenfalls ein Injektionsventil vorgesehen sein und zur Treibmitteldosierung eine Gasdosiereinheit genutzt werden. Mit der Schmelzepumpe wird der notwendige Druck aufgebaut, der benötigt wird, um die Polymerschmelze nach der Zugabe des physikalischen Treibmittels durch den statischen Mischer und das Granulierwerkzeug zu pressen. Die Schmelzepumpe kann sich dabei entweder zwischen dem Schmelzekanal und dem statischen Mischer befinden oder alternativ zwischen der ersten Stufe und dem Schmelzekanal. Wenn die Schmelzepumpe zwischen dem Schmelzekanal und dem statischen Mischer positioniert ist, ist es notwendig, die erste Stufe so zu gestalten, dass in der ersten Stufe bei der Umsetzung der Monomere und/oder Oligomere zum Polymeren ein Druck aufgebaut wird und weiterhin, dass der Druck ausreicht, die Polymerschmelze auch durch den Schmelzekanal zu fördern. Hierzu ist es weiterhin notwendig, den Schmelzekanal entweder direkt oder über eine Rohrleitung an die erste Stufe anzuschließen.

Der statische Mischer wird eingesetzt, um das physikalische Treibmittel homogen in der Polymerschmelze zu verteilen. Der statische Mischer ist vorzugsweise beheizt, um zu vermeiden, dass die Polymerschmelze erstarrt und ist zum Beispiel aus Mischelementen aufgebaut, die eine Verfahrenslänge von mindestens 1 L/D, bevorzugt eine Länge von mindestens 5 L/D aufweisen und die so gestaltet sind, dass die Verweilzeit der Polymerschmelze größer als 0,5 s, bevorzugt größer als 3 s ist.

An den Doppelschneckenextruder oder den statischen Mischer schließt sich dann ein geeignetes System zur Herstellung des Granulats an, insbesondere eine Granuliervorrichtung.

### Beispiele

### Beispiel 1

Mit einem Abstand von 6 L/D vom Beginn des Verfahrensteils eines Zweischneckenextruders ZSK43 der Fa. Coperion GmbH als Reaktionsextruder wurden zur Mischung und Synthese eines thermoplastischen Polyurethans 2 mol 4,4'-Diphenylmethandiisocyanat, 1 mol Polytetramethylenglykol mit einer Molmasse von 1000 g/mol, 1 mol 1,4-Butandiol sowie 0,2 Gewichtsanteile Talkum als Nukleierungsmittel und 30 ppm Zinn-(II)-dioctoat als Katalysator dosiert, bei einer Temperatur zwischen 180 und 220°C gemischt und zur Reaktion gebracht. Der Abstand von 6 L/D wird gewählt, um zu vermeiden, dass rückfließendes Monomer in das Getriebe gelangt. Das rückfließende Monomer wird durch die Schnecke wieder mitgenommen und in Förderrichtung transportiert.

Aus dem Reaktionsextruder wird die Reaktionsmischung in einen Zweischneckenextruder ZSK92 der Firma Coperion GmbH als Hauptextruder überführt. Der Einzug des Hauptextruders befindet sich im Abstand von 6 L/D vom Beginn des Verfahrensteils. Im Hauptextruder wird die Reaktion bei Temperaturen im Bereich von 200 bis 240°C weiter vorangetrieben. Mit einem Abstand von 15 L/D vor dem Ende des Hauptextruders werden als physikalisches Treibmittel 0,2 Gewichtsanteile Stickstoff und 1,5 Gewichtsanteile Kohlendioxid mittels Gasdosierstationen in die Polymerschmelze injiziert. Über eine Schmelzepumpe wird die treibmittelhaltige Polymerschmelze durch eine auf 200°C temperierte Lochplatte in eine mit Wasser durchströmte Granulierkammer gedrückt. Der Durchmesser der Löcher in der Lochplatte beträgt 1,8 mm. Durch ein rotierendes Messer in der Granulierkammer wird die Polymerschmelze an der Lochplatte in Granulatkörner mit einem Partikelgewicht von 20 mg geschnitten. Die Granulatkörner werden mit dem Wasser, das einen Druck von 10 bar und eine Temperatur von 30°C aufweist, aus der Granulierkammer ausgetragen und zu einem Zentrifugaltrockner gefördert. Im Zentrifugaltrockner werden die Granulatkörner aus dem Wasser abgeschieden und getrocknet. Die Schüttdichte des so hergestellten expandierten Granulats beträgt 140 g/l.

### Beispiel 2

Es wurde ein thermoplastisches Polyurethan wie in Beispiel 1 hergestellt. Im Unterschied zu Beispiel 1 wurden jedoch als physikalisches Treibmittel 0,2 Gewichtsanteile Stickstoff und 2 Gewichtsanteile Kohlendioxid eingesetzt. Der Durchmesser der Löcher in der Lochplatte betrug 2,4 mm. Das durch die Granulierkammer strömende Wasser hat einen Druck von 5 bar und eine Temperatur von 20°C. Die auf diese Weise hergestellten Granulatkörner haben ein Partikelgewicht von 32 mg und die Schüttdichte des so hergestellten Granulats beträgt 120 g/l.

### Beispiel 3

Zur Herstellung des thermoplastischen Polyurethans wurden die gleichen Ausgangsstoffe wie in Beispiel 1 eingesetzt. Im Unterschied zu Beispiel 1 wurden als physikalisches Treibmittel 0,3 Gewichtsanteile Stickstoff und 2,5 Gewichtsanteile Kohlendioxid verwendet. An den Hauptextruder schließt sich ein Schmelzekanal an, in den das physikalische Treibmittel injiziert wurde. Der Schmelzekanal ist von der Schmelzepumpe gefolgt, durch die die physikalisches Treibmittel enthaltende Polymerschmelze in einen auf 240°C temperierten statischen Mischer als Dispergieraggregat gepresst wird. An den statischen Mischer schließt sich eine Lochplatte an, die Löcher mit einem Durchmesser von 1 mm aufweist, und durch die die Polymerschmelze in eine Granulierkammer gepresst wird. Es wurde ein Partikelgewicht des so hergestellten Granulats von 5 mg eingestellt. Das die Granulierkammer durchströmende Wasser hat einen Druck von 20 bar und eine Temperatur von 35°C. Die Schüttdichte des so hergestellten Granulats beträgt 100 g/l.

## Patentansprüche

1. Verfahren zur Herstellung von expandiertem thermoplastischem Elastomer, folgende Schritte umfassend:
(a) Zugabe von zur Herstellung des thermoplastischen Elastomers eingesetzten Monomeren und/oder Oligomeren und gegebenenfalls weiterer Edukte in eine erste Stufe einer Polymerverarbeitungsmaschine,
(b) Mischen der Monomere und/oder Oligomere sowie der gegebenenfalls zugegebenen weiteren Edukte und Reaktion der Monomere und/oder Oligomere zu einer Polymerschmelze in der ersten Stufe der Polymerverarbeitungsmaschine,
(c) Einleiten der Polymerschmelze in eine zweite Stufe der Polymerverarbeitungsmaschine und Zugabe eines physikalischen Treibmittels sowie gegebenenfalls weiterer Edukte, um eine treibmittelhaltige Polymerschmelze zu erhalten,
(d) Formen der treibmittelhaltigen Polymerschmelze zu einem expandierten thermoplastischen Elastomer.

2. Verfahren gemäß Anspruch 1, **dadurch gekennzeichnet, dass** die Polymerverarbeitungsmaschine eine Schneckenkolbenmaschine ist.

3. Verfahren gemäß Anspruch 2, **dadurch gekennzeichnet, dass** die erste Stufe der Schneckenkolbenmaschine und die zweite Stufe der Schneckenkolbenmaschine Abschnitte eines Extruders sind.

4. Verfahren gemäß Anspruch 2, **dadurch gekennzeichnet, dass** die erste Stufe der Schneckenkolbenmaschine ein erster Extruder eines Tandemextruders und die zweite Stufe der Schneckenkolbenmaschine ein zweiter Extruder des Tandemextruders ist.

5. Verfahren gemäß Anspruch 1, **dadurch gekennzeichnet, dass** die zweite Stufe der Polymerverarbeitungsmaschine eine Schmelzepumpe, gegebenenfalls mit einem Schmelzesieb oder einem statischen Mischer, umfasst.

6. Verfahren gemäß einem der Ansprüche 1 bis 5, **dadurch gekennzeichnet, dass** das expandierte thermoplastische Elastomer ein expandiertes Granulat ist.

7. Verfahren gemäß Anspruch 6, **dadurch gekennzeichnet, dass** zur Herstellung des Granulats in Schritt (d) die Polymerschmelze durch eine Lochplatte gepresst wird, die auf eine Temperatur im Bereich von 150 bis 280°C temperiert ist, die durch die temperierte Lochplatte gepresste Polymerschmelze mit einer Schneidvorrichtung in einzelne expandierende Granulatkörner geschnitten wird und die Granulatkörner mit einem Flüssigstrom aus der Granulierkammer ausgetragen werden.

8. Verfahren gemäß Anspruch 7, **dadurch gekennzeichnet, dass** die Granulierkammer von einer Flüssigkeit durchströmt wird, die auf eine Temperatur im Bereich von 10 bis 60°C temperiert ist und deren Druck 0,7 bis 20 bar oberhalb des Umgebungsdrucks liegt.

9. Verfahren gemäß einem der Ansprüche 6 bis 8, **dadurch gekennzeichnet, dass** das expandierte Granulat ein Partikelgewicht im Bereich von 1 bis 40 mg aufweist.

10. Verfahren gemäß einem der Ansprüche 1 bis 9, **dadurch gekennzeichnet, dass** das Treibmittel Kohlendioxid, Stickstoff oder eine Mischung aus Kohlendioxid und Stickstoff enthält.

11. Verfahren gemäß Anspruch 10, **dadurch gekennzeichnet, dass** das Treibmittel 50 Gew.-% bis 100 Gew.-% Kohlendioxid und 0 Gew.-% bis 50 Gew.-% Stickstoff und kein weiteres Treibmittel enthält.

12. Verfahren gemäß einem der Ansprüche 1 bis 10, **dadurch gekennzeichnet, dass** das Treibmittel ein organisches Treibmittel ausgewählt aus Alkanen, halogenierten Kohlenwasserstoffen oder einer Mischung dieser Substanzen enthält.

13. Verfahren gemäß einem der Ansprüche 1 bis 12, **dadurch gekennzeichnet, dass** das thermoplastische Elastomer ein thermoplastisches Polyurethan ist.

14. Verfahren gemäß einem der Ansprüche 1 bis 13, **dadurch gekennzeichnet, dass** das expandierte thermoplastische Elastomer eine Dichte im Bereich von 30 bis 350 g/l aufweist.

15. Verfahren gemäß einem der Ansprüche 1 bis 14, **dadurch gekennzeichnet, dass** das expandierte thermoplastische Elastomer eine geschlossene Haut aufweist.

## Claims

1. A process for production of expanded thermoplastic elastomer, said process comprising the steps of:
(a) adding monomers and/or oligomers used for producing the thermoplastic elastomer with or without further starting materials into a first stage of a polymer-processing machine,
(b) mixing the monomers and/or oligomers and also the optionally added further starting materials and reacting the monomers and/or oligomers to give a polymer melt in the first stage of the polymer-processing machine,
(c) passing the polymer melt into a second stage of the polymer-processing machine and adding a physical blowing agent with or without further starting materials to obtain a polymer melt comprising a blowing agent,
(d) molding the polymer melt comprising a blowing agent into an expanded thermoplastic elastomer.

2. The process according to claim 1 wherein the polymer-processing machine is a screw-plunger machine.

3. The process according to claim 2 wherein the first stage of the screw-plunger machine and the second stage of the screw-plunger machine are sectors of an extruder.

4. The process according to claim 2 wherein the first stage of the screw-plunger machine is a first extruder of a tandem extruder and the second stage of the screw-plunger machine is a second extruder of the tandem extruder.

5. The process according to claim 1 wherein the second stage of the polymer-processing machine comprises a melt pump, optionally with a melt sieve or a static mixer.

6. The process according to any of claims 1 to 5 wherein the expanded thermoplastic elastomer is an expanded pellet material.

7. The process according to claim 6 wherein the pellet material is obtained by forcing the polymer melt in step (d) through a pelletizing die regulated to a temperature in the range from 150 to 280°C, using a cutting device to cut the polymer melt forced through the temperature-regulated pelletizing die into individual expanding pellets and using a stream of liquid to export the pellets from the pelletizing chamber.

8. The process according to claim 7 wherein a temperature-regulated liquid flowing through the pelletizing chamber as a stream has a temperature in the range from 10 to 60°C and a pressure in the range from 0.7 to 20 bar above ambient pressure.

9. The process according to any of claims 6 to 8 wherein the expanded pellet material has a bead weight in the range from 1 to 40 mg.

10. The process according to any of claims 1 to 9 wherein the blowing agent comprises carbon dioxide, nitrogen or a mixture of carbon dioxide and nitrogen.

11. The process according to claim 10 wherein the blowing agent comprises from 50% by weight to 100% by weight carbon dioxide and from 0% by weight to 50% by weight nitrogen and no further blowing agent.

12. The process according to any of claims 1 to 10 wherein the blowing agent comprises an organic blowing agent selected from alkanes, halogenated hydrocarbons or a mixture thereof.

13. The process according to any of claims 1 to 12 wherein the thermoplastic elastomer is a thermoplastic polyurethane.

14. The process according to any of claims 1 to 13 wherein the expanded thermoplastic elastomer has a density in the range from 30 to 350 g/l.

15. The process according to any of claims 1 to 14 wherein the expanded thermoplastic elastomer has an uninterrupted skin.

## Revendications

1. Procédé de fabrication d'un élastomère thermoplastique expansé, comprenant les étapes suivantes :
(a) l'ajout des monomères et/ou des oligomères et éventuellement d'autres réactifs utilisés pour la fabrication de l'élastomère thermoplastique dans une première étape d'une machine d'usinage de polymères,
(b) le mélange des monomères et/ou des oligomères et des autres réactifs éventuellement ajoutés et la réaction des monomères et/ou des oligomères pour former une masse fondue de polymère dans la première étape de la machine d'usinage de polymères,
(c) l'introduction de la masse fondue de polymère dans une deuxième étape de la machine d'usinage de polymères et l'ajout d'un agent gonflant physique et éventuellement d'autres réactifs pour obtenir une masse fondue de polymère contenant un agent gonflant,
(d) le façonnage de la masse fondue de polymère contenant un agent gonflant en un élastomère thermoplastique expansé.

2. Procédé selon la revendication 1, **caractérisé en ce que** la machine d'usinage de polymères est une machine à piston et à vis.

3. Procédé selon la revendication 2, **caractérisé en ce que** la première étape de la machine à piston et à vis et la deuxième étape de la machine à piston et à vis sont des sections d'une extrudeuse.

4. Procédé selon la revendication 2, **caractérisé en ce que** la première étape de la machine à piston et à vis est une première extrudeuse d'une extrudeuse tandem et la deuxième étape de la machine à piston et à vis est une deuxième extrudeuse d'une extrudeuse tandem.

5. Procédé selon la revendication 1, **caractérisé en ce que** la deuxième étape de la machine d'usinage de polymères comprend une pompe à masse fondue, éventuellement avec un tamis à masse fondue ou un mélangeur statique.

6. Procédé selon l'une quelconque des revendications 1 à 5, **caractérisé en ce que** l'élastomère thermoplastique expansé est un granulat expansé.

7. Procédé selon la revendication 6, **caractérisé en ce que**, pour la fabrication du granulat, à l'étape (d), la masse fondue de polymère est extrudée au travers d'une plaque perforée, qui est conditionnée à une température dans la plage allant de 150 à 280 °C, la masse fondue de polymère extrudée au travers de la plaque perforée conditionnée est découpée avec un dispositif de découpe en grains de granulat en expansion individuels et les grains de granulat sont déchargés de la chambre de granulation avec un courant liquide.

8. Procédé selon la revendication 7, **caractérisé en ce que** la chambre de granulation est traversée par un liquide qui est conditionné à une température dans la plage allant de 10 à 60 °C et dont la pression se situe 0,7 à 20 bar au-dessus de la pression ambiante.

9. Procédé selon l'une quelconque des revendications 6 à 8, **caractérisé en ce que** le granulat expansé présente un poids de particule dans la plage allant de 1 à 40 mg.

10. Procédé selon l'une quelconque des revendications 1 à 9, **caractérisé en ce que** l'agent gonflant contient du dioxyde de carbone, de l'azote ou un mélange de dioxyde de carbone et d'azote.

11. Procédé selon la revendication 10, **caractérisé en ce que** l'agent gonflant contient 50 % en poids à 100 % en poids de dioxyde de carbone et 0 % en poids à 50 % en poids d'azote et aucun agent gonflant supplémentaire.

12. Procédé selon l'une quelconque des revendications 1 à 10, **caractérisé en ce que** l'agent gonflant contient un agent gonflant organique choisi parmi les alcanes, les hydrocarbures halogénés ou un mélange de ces substances.

13. Procédé selon l'une quelconque des revendications 1 à 12, **caractérisé en ce que** l'élastomère thermoplastique est un polyuréthane thermoplastique.

14. Procédé selon l'une quelconque des revendications 1 à 13, **caractérisé en ce que** l'élastomère thermoplastique expansé présente une densité dans la plage allant de 30 à 350 g/1.

15. Procédé selon l'une quelconque des revendications 1 à 14, **caractérisé en ce que** l'élastomère thermoplastique expansé présente une peau fermée.
